# EUROPEAN PATENT SPECIFICATION

(11) **EP 2 978 225 B1**
(45) Date of publication and mention of the grant of the patent: **08.11.2017**
(21) Application number: 14306193.5
(22) Date of filing: 23.07.2014
(51) Int. Cl.: H04N 21/2343, H04N 21/845

(54) **Method for obtaining in real time a user selected multimedia content part**
Verfahren zur Herstellung in Echtzeit eines benutzerdefinierten Multimediainhaltteils
Procédé permettant d'obtenir en temps réel une partie de contenu multimédia sélectionné par l'utilisateur

(43) Date of publication of application: 27.01.2016
(73) Proprietor: Wildmoka, 06560 Valbonne (FR)
(72) Inventor: Menguy, Thomas, 06560 VALBONNE (FR); Livadiotti, Christian, 06580 PEGOMAS (FR)
(74) Representative: Hautier, Nicolas

(56) References cited:
- EP-A2- 1 796 394
- EP-A2- 2 637 414
- WO-A1-03/013138
- WO-A2-2009/075724

## Description

### TECHNICAL FIELD

The present disclosure relates to a system and a method for real time multimedia content processing. More precisely, and without any limitation, the present disclosure relates to a system and a method for multimedia content selection, sharing, storing and delivery.

### BACKGROUND

The technical developments made in the field of multimedia contents and computing allows accessing a huge multimedia content from anywhere, on several devices, in real time or in time-shift. At the same time, social networks are growing very fast. Social networks are prone to incite users to share all kind of information such as activities, feelings, pictures and video. Accordingly, there are more and more systems which offer interactivity between multimedia contents and their users. One goal is to increase the users' experience when they watch any multimedia content.

The multimedia industry has to deal with the so called "second screen", usually a tablet or a smartphone, which is used while the user is also watching a video content on a television or on a computer. Then people are no more just passively watching their television, there are now chatting, browsing or reading on their second screen. Thus the multimedia industry has to find a way of using this second screen in order to meet users' expectations. Some television programs are designed to be watch on television and also on a second screen allowing the access to some goodies and interactive applications. This interactivity may also benefit from social networks. A lot of television programs have their own social network. In the meantime, some systems allow users to share multimedia contents such as video's sequences from a television program or from any multimedia content.

General solutions exist to share a video content. Whatever is the solution, to share a video, the sequence shall begin with a so-called I-frame. An I-frame is called an "Intra-coded picture", it is a fully specified frame, like a conventional static image file. In a video, depending on the encoding, an I-frame appears only every 1 to 10 seconds. The other frames are called P-frames and B-frames and hold only part of the image information. For example, P-frames and B-frames may contain only data that characterizes the image variations with regard to the preceding and/or forwarding frame. Therefore the P and B frames need less memory than an I-frame to be stored and thus improve video compression rates and the throughput when processing and sending the sequence.

To share a video part, the user needs to select a part of the said video. To be able to be read it, this video part must start with an I-frame. Thus there are different ways to proceed with the sharing.

The most natural way seems to be selecting the video part with an accuracy of one frame for example, and then to encode the video part as to make the first frame become an I-frame. This encoding step takes time and requires significant computing power which is a burdensome drawback when the video part is intended to be selected, shared and received in real time while the video content is displayed on the "first screen". Another way to share a video part is to start it with the closest I-frame from the user's selected frame, which implies no re-encoding process but the video's part section frame accuracy is very low due to the fact that most of the time there is an I-frame only every 1 to 10 seconds.

These two ways for selecting and sharing a video part present two main problems, the first one is linked to the selection accuracy, and the other one is linked to the time and computing power for the necessary encoding processing step before the sharing step, mainly if this processing step has to be done by the user's device, which is most of the time a mobile communication device with a low computing power.

EP1796394 discloses a method and apparatus for distributing a content stream from a headend to a subscriber terminal, wherein the content stream is processed at the headend to generate a sequence of instances having successively staggered reference frames. A request for the content streams is received from the subscriber and an instance having the first reference frame after the initial time is selected and transmitted towards the subscriber terminal.

The purpose of the present invention is to reduce significantly the required computing power while increasing the accuracy of the video part selection.

### SUMMARY

The present invention relates to a method for obtaining a user selected multimedia content part comprising a video content, based on a multimedia content comprising at least an initial video content including at least an initial I-frame, the method comprising:
- A processing step comprising at least the following step performed by a server connected to a user terminal or by a user terminal and based on the initial video content:
   a) Obtaining K duplicated video contents, each of the K video contents comprising groups of one or two segments, each segment comprising frames, each group comprising N frames, the first segment of each group comprising i*X frames; and the other segment of the group comprising (K-i)*X frames, wherein K is equal to N divided by X, wherein X is a frame accuracy for the multimedia content part selection and wherein i is an integer and i = 0 to K-1; each segment being encoded in order to begin with an I-frame;
- A selecting step performed by the server connected to the user terminal or by the user terminal after the processing step and upon reception of at least one user's instruction and comprising at least:
   b) Selecting a first I-frame and a last frame taken among the segments of any one of the K duplicated video contents;
   c) Selecting, among anyone of the K duplicated video contents, a first segment starting with the selected first I-frame;
   d) Selecting, among anyone of the K duplicated video contents, a second segment ending with the selected last frame;
   e) Assembling, in between the first segment and the second segment, zero, one or a plurality of intermediate segments taken among any one of the K duplicated video contents and taken in between the first segment and the second segment in order to have all the frames contained in said one or in said plurality of said intermediate segments in between the first and the last frames, obtaining thereby the user selected multimedia content part;

The method also comprises a step f) of: sharing, over at least one communication network, and/or storing, on a memory device, the user's selected multimedia content part.

Therefore, the processing that is required upon a selection made by the user is very limited. Most of the processing is performed before receiving the user's instruction to select a sequence and to share it or to store it. In particular, the invention avoids any need to perform, in real time, an encoding of the user's selection.

Thus, the invention allows significantly reducing the required computing power and time for sharing a video content. The invention is consequently a very relevant solution for video content sharing in real time.

According to an example, after the assembling step e), the user selected multimedia content part is shared over a communication network such as the Internet and/or stored on a memory device.

According to an example, the step a) is performed by a server connected to the user terminal. That embodiment allows having a real time execution of the present invention due to the high computing power available on the server.

According to an example, the steps b) to f) are performed by a server connected to the user terminal. That embodiment allows using a low computing power terminal as the user terminal because the processing steps requiring computing power are all or almost all done on the server.

According to an example, the assembling step comprises a selection of the intermediate segments containing the lowest memory size, most of the time these segments are those who contain the lowest number of I-frames, in between the first segment and the last segment, taken among any of the K duplicated video contents, in order to have all frames in between the first frame and the last frame. Therefore, the assembling step is performed to reduce the memory size of the user's selected multimedia content. The processing, the downloading and the storage of the selected multimedia content are therefore facilitated.

The K video contents comprise frames that all relate to the same frames of the initial video content.

Preferable embodiments of the invention are set out in dependent claims 2-14. The present invention also relates to a computer-program product as set out in independent claim 15.

According to an example, a computerized system of delivering multimedia's content over a communication network, comprises :
- At least one device being able to communicate wirelessly or non-wirelessly over at least one communication network
- At least one memory ;
- At least one processor coupled to the at least one memory and configured to execute the method recited above.

According to an example, a method for sharing and/or storing in real time a user selected multimedia content part, based on a multimedia content comprising at least an initial video content and containing frames comprising a video content, comprises at least the steps a) to e) recited above and an additional step of sharing and/or storing the user selected multimedia content part.

According to an example, a system comprising at least one server, is connected to at least one communication network such as the internet, and a user terminal is connected to at least one communication network such as the Internet, the said server contains the computer-program that contains software program instructions, where execution of the software program instructions by at least one data processor results in performance of the method according to the invention.

### BRIEF DESCRIPTION OF THE DRAWINGS

The above and further features of the invention include various novel details of the components' construction and combination. These novel features will be more particularly pointed out in the following claims, and their advantages will also become evident as they are described in detail with reference to the accompanying drawings, in which:
- Figure 1 depicts the interaction between a server that provides a video content, a first screen, such as a television and a user of a so-called second screen that selects and sends a video part to another user.
- Figure 2 depicts an exemplary architecture a user terminal.
- Figures 3a and 3b describe an algorithm depicting several steps included into an exemplary embodiment of the present invention.
- Figures 4a and 4b describe an aspect of the present invention which corresponds to the K duplicated video contents.
- Figure 5 describes the J sets of pre-defined image processing such as inclusions and filters.
- Figure 6 describes the insertion of advertisings into the selected video content.

The drawings are given by way of examples and are not limitative of the invention.

### DETAILED DESCRIPTION

Reference will be made in detail to the exemplary embodiments implemented according to the disclosure, the examples of which are illustrated in the accompanying will be used throughout the drawings to refer to the same or like parts.

Before providing below a detailed review of embodiments of the invention, the optional characteristics that may be used in association or alternatively will be listed hereinafter:
- According to a preferred and optional embodiment, the steps a) to f) are performed by a server connected to the user terminal. That embodiment allows having a real time execution of the present invention due to the high computing power available on the server.
- According to a potential and optional embodiment, the steps a) to f) are performed by the user terminal. That embodiment allows the use of the present invention in a non-connected environment directly applied on local multimedia stored in the user terminal for example.
- According to a potential and optional embodiment, the step a) and/or the steps c) to f) are performed by the user terminal connected to the server. That embodiment allows the user to use personal features and to apply image processing in order to process the video content. Therefore, the user can select by himself the image processing that he wants to apply on the selected video content before storing or sharing it.
- The first frame of a given segment is the first frame that is read or more generally that is processed in the given segment.
- Each segment of a group comprises X modulo frames. A group comprises between 0 and a plurality of frames.
- The groups of two consecutive video contents correspond to each other in the sense that they contain the same video content.
- According to an embodiment, the processing step and the selecting step are both performed by the server connected to the user terminal.
- According to an embodiment, after the assembling step, the multimedia's selection is shared over at least one communication network. That step allows the user to share its own multimedia selection part with other people such as friends or family for example.
- According to an embodiment, the method comprises, during the step a): preparing other video contents merging the biggest segments (the ones of N frames) together in multiple of N to optimize the size of such encoded segments (as it is known the bigger the segments, the less the number of I-Frames vs multiple segments, better the size is). This step allows reducing the memory size of the user's selected multimedia part.
- According to an embodiment, the present invention relates to a method for real time sharing of the user selected multimedia content part between the user terminal and the at least one receiver terminal.
- According to an embodiment, at least step a) is executed in real time while the initial video content is being streamed.
- According to an embodiment, at least steps b) to f) are performed in real time upon receiving the selection made by the user.
- According to an embodiment, the selecting step b) comprises an automatic selection of an I-frame as the first frame, this I-frame being the closest I-frame from the user's selected frame.
- According to an embodiment, the selecting step b) comprises a manual selection of an I-frame as the first frame.
- According to an embodiment, the selecting step b) comprises an automatic selection of the last frame.
- According to an embodiment, the selecting step b) comprises a manual selection of the last frame. The selecting step b) comprises enabling the user to only select a last frame among any one of the last frames of any one of the K duplicated video contents and wherein said last frame is a manually selected frame.
- According to an embodiment, the assembling step e) comprises an insertion of advertisings between some of the segments.
- According to an embodiment, the assembling step e) comprises an insertion of advertisings before the first segment.
- According to an embodiment, the assembling step e) comprises an insertion of advertisings after the last segment.
- According to an embodiment, the advertisings are based on the multimedia's content.
- According to an embodiment, the advertisings are based on the user's profile.
- According to an embodiment, the advertisings are based on the receiver's profile.
- According to an embodiment, the present method further comprises :
   - During the steps a) :
      ▪ Multiplying the K duplicated video contents by a number J of pre-defined image processing obtaining thereby J sets of K duplicated video contents;
      ▪ Performing at least one image processing to at least the set Jᵢ taken among any one of the J sets of the K duplicated video contents, the image processing being anyone of : adding an inclusion on at least a plurality of frames of the K duplicated video contents of the set Jᵢ; applying a filter on at least a plurality of frames of the K duplicated video contents of the set Jᵢ;
   - between the steps a) and b), a step a') : selecting, preferably automatically, a set S among any of the J sets of K duplicated video contents;
   - performing the steps b) to f) based on said set S.
- According to an embodiment, the step a) is performed in real time while the video is being streamed.
- According to an embodiment, the number J is at least superior or equal to one.
- According to an embodiment, the inclusions are advertisings overprinted on the video contents.
- According to an embodiment, the inclusions are a visual element overprinted on the video contents.
- According to an embodiment, the inclusions are manually chosen by the user.
- According to an embodiment, the inclusions are automatically chosen based on the multimedia's content.
- According to an embodiment, the inclusions are automatically chosen based on the user's profile.
- According to an embodiment, the method comprises a step a') : Automatic selection of a set S among any of the J sets of K duplicated video contents.
- According to an embodiment, the method comprises a step a') : Manual selection of a set S among any of the J sets of K duplicated video contents.
- According to an embodiment, the selecting step c) of the first segment is made among anyone of the K duplicated video contents from the chosen set S.
- According to an embodiment, the selecting step d) of the last segment is made among anyone of the K duplicated video contents from the chosen set S.
- According to an embodiment, the assembling step comprises the selection of a plurality of intermediate segments, in between the first segment and the last segment, taken among any of the K duplicated video contents from the chosen set S, in order to have all frames in between the first frame and the last frame.
- According to an embodiment, the plurality of intermediate segments, taken among any one of the K duplicated video contents in between the first segment and the last segment in order to have all frames in between the first frame and the last frame, is the plurality of intermediate segments with the lowest memory size.
- According to an embodiment, the assembling step comprises the selection of a plurality of intermediate segments, in between the first segment and the last segment, taken among any of the K duplicated video contents from the chosen set S, in order to have all frames in between the first frame and the last frame and in order to have the lowest memory size.
- According to an embodiment, the assembling step comprises the selection of a plurality of intermediate segments, in between the first segment and the last segment, taken among any of the K duplicated video contents from the chosen set S, in order to have all frames in between the first frame and the last frame and in order to have the lowest number of I-frames in the selection.
- According to an embodiment, the advertisings are based on the inclusions of the selected set S.
- According to an embodiment, the selection frame accuracy X is chosen by the user.
- According to an embodiment, the selection frame accuracy X is chosen automatically in order to reduce the execution time of the said method.
- According to an embodiment, the selection segment length N is chosen by the user.
- According to an embodiment, the selection segment length N is chosen automatically in order to reduce the execution time of the said method.
- According to an embodiment, the first I-frame of the user's selection is chosen to be the closest previous I-frame from the user's selected first frame.
- According to an embodiment, the first I-frame of the user's selection is chosen to be the closest next I-frame from the user's selected first frame.
- According to an embodiment, the last frame of the user's selection is chosen to be the previous frame of the closest previous I-frame from the user's selected last frame.
- According to an embodiment, the last frame of the user's selection is chosen to be the previous frame of the closest next I-frame from the selected user last frame.
- According to an embodiment, the plurality of intermediate segments, taken among any of the K duplicated video contents in between the first segment and the last segment in order to have all frames in between the first frame and the last frame, is the intermediate segments containing the lowest number of I-frames.
- According to an embodiment, the assembling step, the multimedia selection is shared over at least one communication network.
- According to an embodiment, the assembling step e) comprises an insertion of advertisings inside the user selected multimedia part.
- According to an embodiment, the intermediate segments are taken among any of the K duplicated video contents from the chosen set S.
- According to an embodiment, the intermediate segments, taken among any of the K duplicated video contents from the chosen set S, are the intermediate segments containing the lowest number of I-frames.
- According to an embodiment, the multimedia content can be any kind of multimedia content such as video, audio or any other kind of data content.
- According to an embodiment, the first segment and the last segment can be the same segment.
- According to an embodiment, a step f) is performed after the assembling step e) in order to share, over at least one communication network, and/or to store, on a memory device, the selected multimedia content part.
- According to an embodiment, the processing step is performed on the server or on the user terminal and the selecting step is performed on the user terminal only.
- According to an embodiment, the processing step and the selecting step, in particular steps b), c), d) and e), are performed on the server connected to the user terminal.
- According to an embodiment, the selection frame accuracy X and/or the selection segment length N are chosen automatically in order to reduce the execution time and the used computing power of the present invention.
- According to an embodiment, the assembling step e) comprises an insertion of advertisings inside the user's selected multimedia content part, the advertising being based on the inclusions of the selected set S.
- According to an embodiment, after the assembling step e), performing a step h) of sharing over at least one communication network and/or storing on a memory device, the user selected multimedia content part.
- According to an embodiment, the first segment and the last segment are the same segment.
- According to an embodiment, the method comprises, before the selecting step b), a step of receiving a first frame selected by the user and wherein the selecting step b) comprises an automatic selection of an I-frame as the first frame, the automatically selected first I-frame being the closest I-frame from said first frame selected by the user.
- According to an embodiment, the selecting step b) comprises enabling the user to only select an I-frame among any one of the I-frames of any one of the K duplicated video contents. This step comprises a manual selection of an I-frame among any one of the I-frames of any one of the K duplicated video contents, and wherein said first I-frame is said manually selected I-frame.
- According to an embodiment, the selecting step b) comprises a manual selection of said last frame.
- According to an embodiment, the assembling step comprises assembling, in between the first segment and the last segment, any intermediate segments, taken among any one of the K duplicated video contents, from the chosen set S. This assembling step is performed in order to have all the frames contained in the one or plurality of said intermediate segments, in between the first frame and the last frame.
- According to an embodiment, the assembling step comprises assembling, in between the first segment and the last segment, of any intermediate segment, taken among any one of the K duplicated video contents, from the chosen set S, in between the first segment and the last segment, is made in order to have, in between the first frame and the last frame, all the frame of the initial video content. These frames being similar to those of the initial video content excepted that some of the frames of the initial video content have been encoded to become I-frames.
- According to an embodiment, the assembling step comprises assembling, in between the first segment and the last segment, of any intermediate segment, taken among any one of the K duplicated video contents, from the chosen set S, in between the first segment and the last segment, is made in order to have the same number of frame as the initial video content in between the first frame and the last frame.
- According to an embodiment, the multimedia content is streamed over at least one communication network.
- According to an embodiment, the step a) comprises a decompression of each segment of N frames of the initial video content in order to constitute K duplicated video contents.
- The step of obtaining K video contents comprising, after the decompression, a recompression step wherein the frames of the obtained K video contents are compressed. At least some and preferably each frame is compressed through being encoded in I-frame, B-frame and/or P-frame.
- The method of the preceding claims, wherein during the step a') each uncompressed segments are duplicated and wherein an image processing is applied on each duplicated uncompressed segments, then these image processed uncompressed segments are encoded in order to begin by an I-frame and in order to obtains the J sets of K duplicated video contents.
- According to an embodiment, the present method further comprises :
   - during the step a) :
      ∘ Obtaining J sets of K duplicated video contents, each set comprising K duplicated video contents, at least one set comprising image processing performed on K duplicated video contents, the image processing being anyone of : adding an inclusion on at least a plurality of frames of the K duplicated video contents of the set; applying a filter on at least a plurality of frames of the K duplicated video contents of the set;
   - between the steps a) and b), a step a') comprising: selecting, preferably automatically, a set S among any of the J sets of the K duplicated video contents;
   - performing the steps b) to f) based on said set S.
- The initial video content is compressed. It is different from a raw video. It comprises I-frames, B-frames and P-frames.

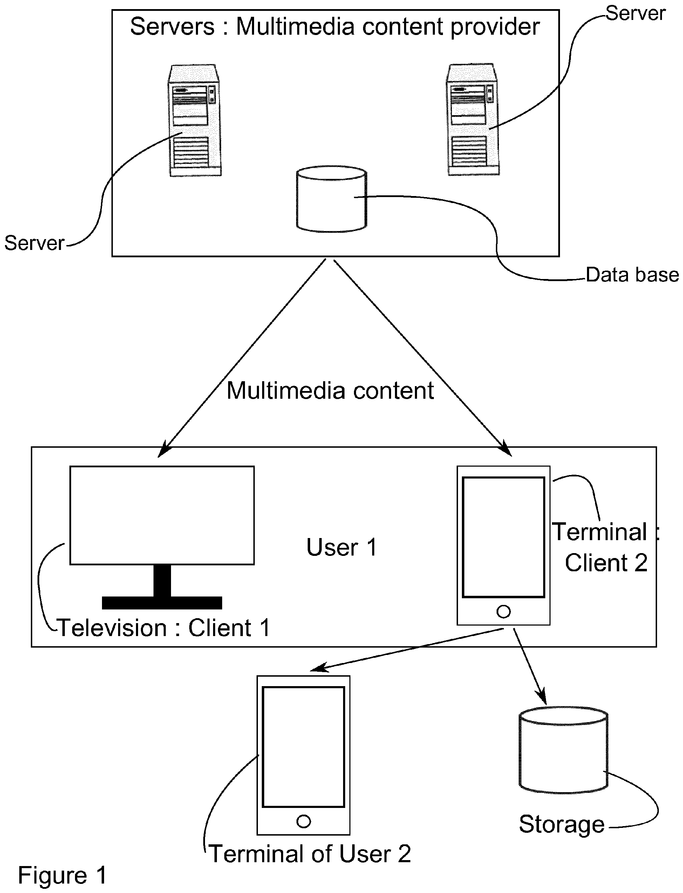

The present invention takes place in a multimedia environment. According with the figure 1, a first user, referred to as user 1, is watching a multimedia content, comprising a video content, for instance on a television, referred to as the "first screen". This multimedia content is provided by at least one server over a communication network such as the Internet for example. The user 1 is also using a user terminal, referred to as the "second screen", such as a smartphone or a tablet for example. According to the present invention, the user 1 can use the second screen in order to select a part of the video content and to share it with a user 2 and/or in order to store it.

Therefore the method of the present invention is preferably performed in real time while a multimedia stream such as a video content is being streamed.

According to an alternative embodiment, the second screen and the first screen are the same screen. The invention can be used for example on a television, a smartphone, a tablet and a computer. For example, the selecting step of the present invention can take place on any kind of display device which plays the live or non-live video. A remote control of the television can be used to select the user selected multimedia content.

According to an alternative embodiment, the multimedia content can be a multimedia content already stored on a device like a smartphone, a set-top-box or a computer for example, or any local storage device. Thus, the multimedia stream is not streamed while the method of the invention is performed.

In one embodiment, the multimedia content can be available on a web site where it can be played in a non-live manner or in a live manner.

The sharing step is done over any communication network, such as the Internet for example.

The storing step is performed over a communication network, such as the Internet for example, and/or is realized on a local storage device.

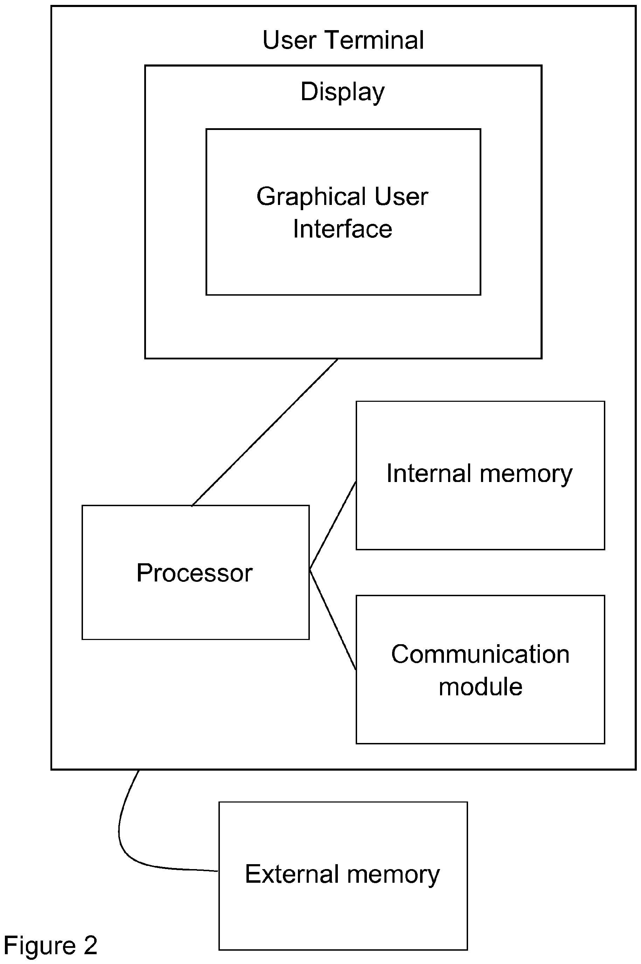

In the present invention, the second screen can be a user terminal allowing the selection of a video part from a multimedia content comprising a video content. The user terminal can be a smartphone, a PC, a set-top-box or a tablet for example. The figure 2 depicts a user terminal according to one exemplary embodiment of the present invention. In this embodiment the user terminal comprises a display device, a graphical user interface, an internal memory, at least one processor and a communication module in order to be able to communicate with a communication network such as the Internet for example. In one particular embodiment the user terminal can be linked to an external memory.

According to the present description of this invention, a video is a succession of frames; each frame contains at least data that can be displayed on any kind of display device. The present invention concerns as well as 2D video than 3D video or any kind of multimedia content as long as there is a stream of data to represent the multimedia content.

According to the present invention, a streamed multimedia content is a multimedia that is constantly received by and presented to a user while being delivered by a provider over at least one communication network.

For a good understanding of the present invention, it is useful to explain the different kind of frames existing in a video content. There are three types of frames used in video compression: I-frames, P-frames and B-frames.
- An I-frame is called an "Intra-coded picture", it is a fully specified frame, like a conventional static image file. P-frames and B-frames hold only part of the frame information, therefore they need less space to store than an I-frame and thus improve video compression rates.
- A P-frame is called a "Predicted picture" and holds only the changes of the considered frame compared to the previous frame.
- A B-frame is called "Bi-predictive picture" and saves even more space by using changes between the current frame and both the preceding and following frames to specify its content.

Then it appears obvious that only an I-frame can be used to correctly begin any video sequence or video part.

Usually, in a video content, only a frame every 1 to 10 seconds is an I-frame. That means that the user's selection cannot be more precise than 1 second. The present invention is also aimed at reducing this inaccuracy.

With reference to figures 1 to 6, an exemplary embodiment of the processing according to the invention is described below.

The present invention is a method comprising at least two steps. The first step is a pre-processing step involving a plurality of sub-steps in order to allow the user to select a part of the multimedia content.

The second step is the selection step made at least in part by the user in order to extract a part of the multimedia content. Then, in one embodiment, this selection can be shared over any communication network such as the Internet for example, and/or stored inside a memory device for example.

According to the present invention, an inclusion is a visual element, such as for instance an advertising or any sign overprinted on a multimedia content. It can be a slogan, a trademark, a logo or any other advertising information.

According to the present invention, a filter is any processing technic which can be applied on any multimedia content in order to modify its content. In the case of a video content, a filter can allow changing the color of the video content for example, or applying an image transformation such as any one of : a blurring, Sepia effect, black and white effects, slow motion for example.

According to the present invention, an image processing, also called image transformation, can be any inclusions as well as any filters applied to a video content.

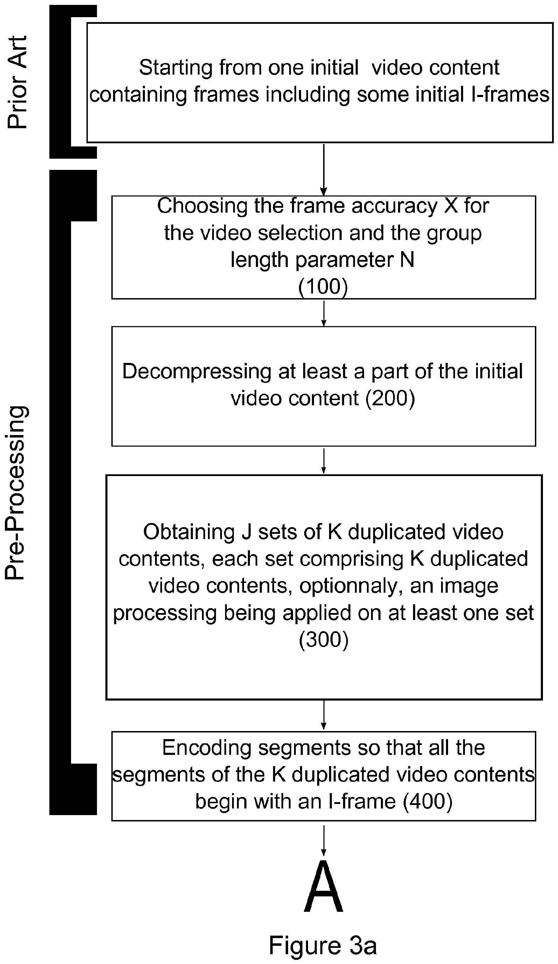

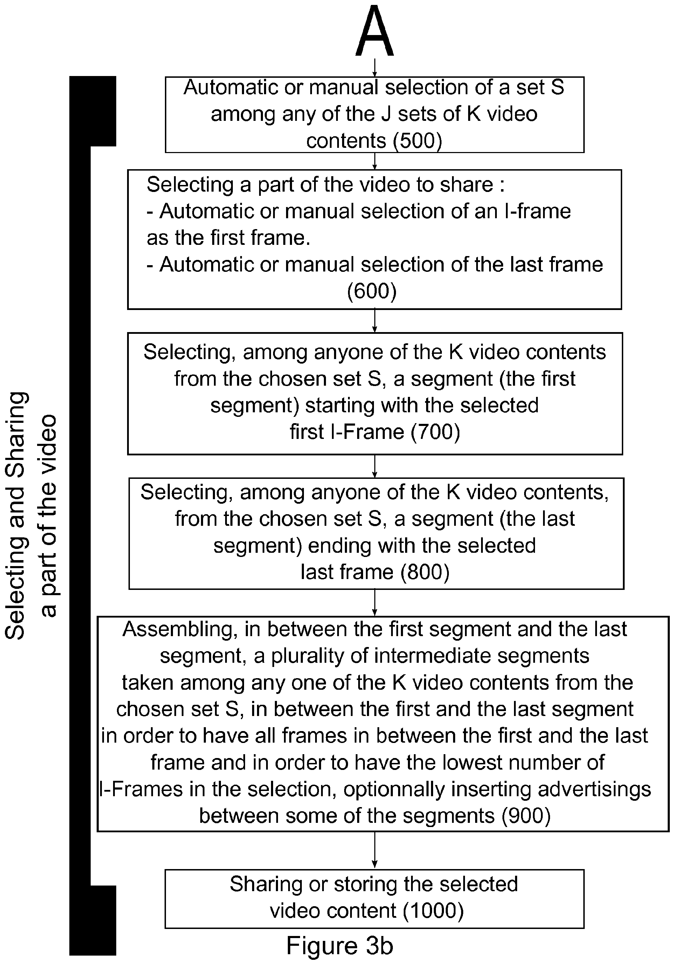

Figures 3a and 3b illustrate, in a particular embodiment, an algorithm depicting an exemplary method for preparing a multimedia content, comprising a video content, in order to share it over a communication network and/or to store it on a memory device. As shown in these figures, the following steps may be performed to prepare and execute the sharing process starting from one initial video content:
- Choosing 100 the frame accuracy X for the video part selection as well as a parameter N, named segment frame length,
- Decompressing 200 at least a part of the initial video content,
- Obtaining 300 J sets of K duplicated video contents, each set comprising K duplicated video contents comprising groups of one or more segments, each segment comprising frames, each group comprising N frames, the first segment of each group comprising i*X frames; and the other segments of the group comprising (K-i)*X frames, wherein K is equal to N divided by X, wherein X is a frame accuracy for the multimedia content part selection and wherein i is an integer and i = 0 to K-1; optionally, an image processing being applied on at least one set.
- Encoding 400 the segments of the K duplicated video contents in order to make them begin with an I-frame,
- Automatic or manual selection 500 of a set S among any of the J sets of K duplicated video contents,
- Selecting 600 a part of the video to share by selecting a first frame and a last frame,
- Selecting 700, among anyone of the K duplicated video contents, a segment, named the first segment, starting with the selected first I-frame,
- Selecting 800, among anyone of the K duplicated video contents, a segment, named the last segment, ending with the selected last frame,
- Assembling 900, in between the first segment and the last segment, any intermediate segments taken among any of the K duplicated video contents, from the chosen set S, in between the first segment and the last segment in order to have all frames between the first frame and the last frame and in order to have the lowest number of I-frames in the selection, optionally inserting advertisings in between some of the segments,
- Sharing 1000 and/or storing the selected video content.

As part of the step 100, the user has the possibility to choose the frame accuracy X for the content selection as well as the minimum number of frames N in a video segment. These parameters may be chosen once and be memorized into the user profile. In that way, each time the user wants to share a video content using the present invention, he does not need to choose these parameters once again.

In another embodiment, these parameters are automatically preselected by the computerized system in order to improve the treatment of the video content by minimizing the computing power and increasing the system efficiency.

This frame accuracy, named parameter X, implies that the user selected video part is accurate with a maximum error equal to X frame between the chosen frame and the frame used for the sharing video.

As part of the step 200, the initial video content is processed segment by segment all over its length.

Each segment is contained in a group of segment, each group containing N frames of the initial video content. Each group of segments is decompressed. The K duplicated video contents are obtained from this decompression of this initial video content. Each K duplicated video contents is created while the other K duplicated video contents are being created. Each group of segments comprises one or more segments. The first segment of each group comprises i*X frames, and the other segments of the group comprise (K-i)*X frames, with is an integer and i = 0 to K-1.

The K video contents comprise frames that all relate to the same frames of the initial video content.

As part of the step 300, J sets of K duplicated video contents are obtained, each set comprising K duplicated video contents, at least one of the J sets comprising an image processing performed on all of its K duplicated video contents, the image processing being anyone of : adding an inclusion on at least a plurality of frames of the K duplicated video contents of the set; applying a filter on at least a plurality of frames of the K duplicated video contents of the set. The inclusions can be based on the multimedia content and/or the user profile and/or any kind of relevant information. For instance, in case the inclusions are advertisings, each inclusion has a specific advertising content and the inclusion selected for a user depends on the user's profile. The filter can be based on the multimedia content and/or the user profile and/or any kind of relevant information. For instance, the filter can be chosen by the user in order to personalize its video selection.

In a particular embodiment, the step 300 comprises a decompression of at least a part the initial video content which includes decompressing segments, and the K duplicated video contents are obtained from said decompression of at least a part the initial video content. An image processing is applied on at least some of the decompressed segments, then these decompressed segments are encoded in order to begin by an I-frame and in order to obtain the J sets of K duplicated video contents.

In an embodiment, the step 300 comprises using the decompressed segments obtained from the step 200. The K duplicated video contents are obtained from said decompression of at least a part the initial video content. An image processing is applied on at least some of the decompressed segments, then these decompressed segments are encoded in order to begin by an I-frame and in order to obtain the J sets of K duplicated video contents.

For example, if J is equal to 10, then there are 10 sets of K duplicated video contents. According to the previous example, K is equal to 5, thus there are 50 video contents of the same initial video content, but each J sets have not the same overprinting advertising.

It appears clearly that this step 300 is optional.

As part of the step 400, an encoding of each segment inside each video contents is realized.

In an embodiment, the encoding step 400 comprises a transformation of a video RAW material, i.e. uncompressed images and uncompressed sound, into a compressed format using an encoder, made of codecs such as for instance h264, MPEG-2, mp3, aac... This encoded material is then encapsulated in a container (like Mpeg-TS for example) that can be read by a video player.

In an embodiment, each segment of the K duplicated video contents is encoded in order to make it begin with an I-frame. When the encoding step is done, each segment of each K duplicated video contents starts with an I-frame.

In a particular embodiment, the initial I-frames of the initial video content are kept in each segment of the duplicated video contents.

Some of, and preferably all, the frames that are not the first frames of each segments are also recompressed. Typically, there are encoded in B-frame or P-frame.

Therefore, most of and preferably all the frames of the obtained K duplicated video contents are compressed.

According to an embodiment, after the encoding step 500, an optional step can be performed in order to reduce the memory size of the user's selected multimedia part. This step comprises preparing other video contents merging the biggest segments (the ones of N frames) together in multiple of N to optimize the size of such encoded segments. As it is known the bigger the segments, the less the number of I-frames, lower the memory size is.

Because each K duplicated video contents comprises several segments with a X frame offset from one to another, there is an I-frame at least every X frame if one consider all these duplicated video contents like only one video content.

This step enables the construction of any video selection, made by the user, by simply assembling some segments or some segments through any of the K duplicated video contents. The user's selected video content has an accuracy of X frame, because the video selection has to start with an I-frame, and there is at least one I-frame every X frame. Starting with an I-frame allows avoiding the encoding process of the user selected video part.

Advantageously, the above mentioned steps 200, 300 and 400 may be executed in real time when the initial video content is being streamed. Therefore, the K duplicated video contents are created and encoded on the fly and continuously as the initial video content is delivered to the user.

According to another embodiment the above mentioned steps 200 and 400 are not executed in real time but are executed based on a static multimedia content. These steps are performed before the multimedia content is made available to be played by users.

As part of the step 500, a selection of a set S among all the J sets is done. One set of K duplicated video contents is then chosen, this set is or is not overprinted by an advertising.

In one embodiment, this selection is done manually by the user depending on his choice about the advertising that he wants to share with the video.

In a preferred embodiment, the selection of the set S is done automatically based on several possibilities. In one case, it can be based on the user's profile and/or his profile over some social network. In another case, it can be based on the receiver's profile and/or his profile over some social network. In an advantageous case, it is based on the selected video part content.

Advantageously, the step 500 is also executed in real time while the initial video content is being streamed. According to another embodiment the step 500 is not executed in real time but is executed based on the static multimedia content before the multimedia content is made available to be played by users.

As part of the step 600, the user is defining a selection of a part of the video in order to share it and/or to store it. This selection is based on the user's frame accuracy. This selection is made of a first frame, named the first frame, and of a last frame, named the last frame.

According to one embodiment, the first frame selection is made among all the I-frames among all the K duplicated video contents of the selected set S. The user makes his choice among the sole I-frames. In this embodiment, the last frame is then also chosen among all the I-frames among all the K duplicated video contents of the selected set S.

In another embodiment, the first frame selection is made among any frames among all the K duplicated video content of the selected set S. In this case, the user can select any frame, but the computerized system automatically choses the closest I-frame from the user's frame selection.

In another embodiment, the last frame selection is made among any frames among all the K duplicated video content of the selected set S. In this case, the user can select any frame, but the computerized system automatically choses the closest frame, ending a segment, from the user's frame selection.

In another embodiment, about the first frame selection, it is not the closest I-frame which is selected by the computerized system, but it is the previous I-frame. In another embodiment it can be the next I-frame.

In one particular embodiment, about the last frame selection, the computerized system choses the previous frame of the closest I-frame.

As part of the step 700, a segment, named the first segment, of the segment starting with the selected first I-frame is selected among the K duplicated video contents from the chosen set S.

As part of the step 800, a segment, named the last segment, of the segment ending with the selected last frame is selected among the K duplicated video contents from the chosen set S.

As part of the step 900, an assembling step, in between the first segment and the last segment, of any intermediate segment, taken among any one of the K duplicated video contents, from the chosen set S, in between the first segment and the last segment, is made in order to have all the frames in between the first frame and the last frame. By this way, the selected part of the video that the user wants to share is simply the assembly of several segments of video, all starting by an I-frame.

As part of the step 900, an assembling step is performed and comprises assembling, in between the first segment and the last segment, any intermediate segments, taken among any one of the K duplicated video contents, from the chosen set S. This assembling step is performed in order to have all the frames contained in the one or plurality of said intermediate segments, in between the first frame and the last frame.

Advantageously, the reception by the server of the selection made by the user triggers the above mentioned steps 600 to 900. These steps are then executed in real time. The selection made by the user

According to one embodiment, this assembling step is made in order to have the lowest memory size of the selection. This can be done by selecting, among all the possible paths of segments among all the K duplicated video contents of the selected set S in between the first frame and the last frame, the path containing the lowest memory size segments. Having the lowest memory size segments allows reducing the memory size of the selected part of the video that the user wants to share and then reducing the computing power and the time to share it as well as the memory size used on a memory device to store it.

In one embodiment, the assembling step 900 comprises the inserting of one or several advertisings before and/or between and/or after one or several segments. An advertising can be, for example, a short video of few seconds. This video is stored in the computerized system with several other advertising video. These advertisings start with an I-frame, they are already encoded and ready to be shared and/or inserted between two segments, each starting with an I-frame. Then inserting any video segment before and/or after and/or between any segments is possible and there is no need to encode the video after the inserting.

In one embodiment, the advertisings are based on the multimedia content and/or the user profile and/or the receiver profile and/or the inclusions of the set S.

As part of the step 1000, the selection of the user is ready to be shared and/or stored because there is no need to encode the selected video part which contains already an I-frame as the first frame. The selection can be shared over any communication network such as Internet.

In one embodiment, the selected video part can be stored in any memory device.

In one embodiment, the sharing process comprises sending the user's selected video content directly to another user, named user 2, by sending the user's selected video content or simply a network address that redirects the user 2 to the user's selected video content. In the same way, the sharing process can comprise sending the user's selected video content to a server and/or a social network in order to share it directly or to share a network address redirecting to the user's selected video content.

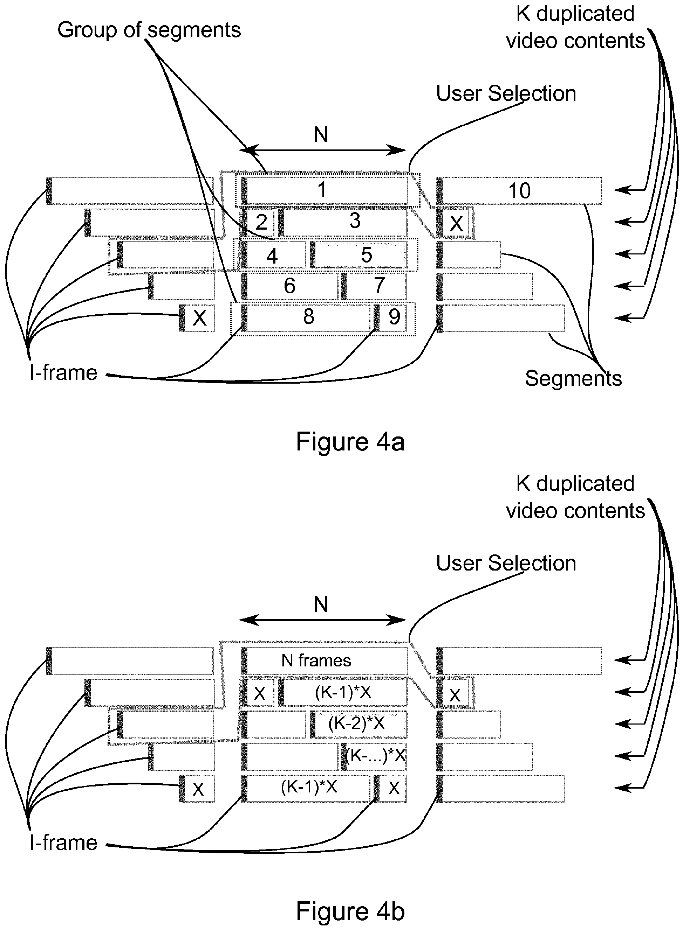

Figures 4a and 4b illustrate, in a particular embodiment, the detailed K duplicated video contents. Depending of the parameters N and X chosen by the user and/or the system, the initial video content is duplicated into K identical video contents, such as K is equal to N divided by X, comprising uncompressed segments.

Figure 4a depicts K duplicated video contents. Each video content comprises groups of one or more of segment and each group comprises N frames. The first video content depicted on Figure 4a presents a group comprising only one segment. The duplicated video contents depicted below the first video content present each a group comprising two segments.

From the initial video content, each segment of N frames of the initial video content is decompressed in order to generate the segments of the K duplicated video content. In figure 4a each segment is numbered in order to understand more clearly the process of selecting a part of the initial video content to create the segments of a group of a first duplicated video content, then the next segment which has an X frame offset from the previous one is used to constitute a segment of the corresponding group of the second duplicated video content.

Therefore, on Figure 4a the numbered segments show the creation timeline of the K duplicated video contents. In a particular embodiment and with reference to figure 4a, the segments are constituted in the following order: segment "1" → segment "2" → segment "3"→ segment "4"→ segment "5"→ segment "6"→ segment "7"→ segment "8"→ segment "9"→ segment "10"→....

Figure 4b shows the number of frames inside each segments of each K duplicated video contents. A K duplicated video content comprises groups of segments. A group comprises N frames. A group can comprise one or more segments. A first segment can comprise i*X frames for example, and a second segment can comprise then (K-i)*X frames with i being an integer and i = 0 to (K-1). It has to be noticed that X is equal to N divided by K.

From one K duplicated video content to another one, the integer i increases by one. For example, for the first K duplicated video content, each group of segments contains only one segment of N frames because i is equal to 0. For the second K duplicated video content, each group of segments contains two segments, for example, the first segment containing X frames and the second (K-1)*X frames because i is equal to 1, and so on for all the duplicated video contents.

An additional step, subsequent or simultaneous, is the encoding of each segment in order to make it begin with an I-frame.

Due to the fact that a video has to start by an I-frame to be read, the user selection has an accuracy of X frame because there is at least one I-frame every X frame.

In one advantageous embodiment, the user's selected video content starts by the closest I-frame from the user's selection first frame.

In one advantageous embodiment, the user's selected video content ends by the closest frame, ending a segment of the K duplicated video contents, from the user's selection last frame.

Now, in order to have the user's selected video content ready to be stored or shared for example, all the frames, in between the first I-frame of the user selection and the last frame, have to be assembled all together.

In one particular embodiment, in order to reduce the memory size of the user's selected video content, the segments, chosen inside all the K duplicated video contents in between the first I-frame of the user selected video part and the last I-frame, are the segments having the lowest memory size.

In one particular embodiment, in order to reduce the memory size of the user's selected video content, the segments, chosen inside all the K duplicated video contents in between the first I-frame of the user selected video part and the last I-frame, are the segments containing the lowest number of I-frames. As explained before, an I-frame is a full frame containing the entire frame data, thus its memory size is higher than for a P or B-frame.

Thus, a preferred embodiment of the present invention finds the segments containing the lowest number of I-frames between the first I-frame of the user selected video part and its last frame. This way can go through different segments among the K duplicated video contents as shown on figure 4a.

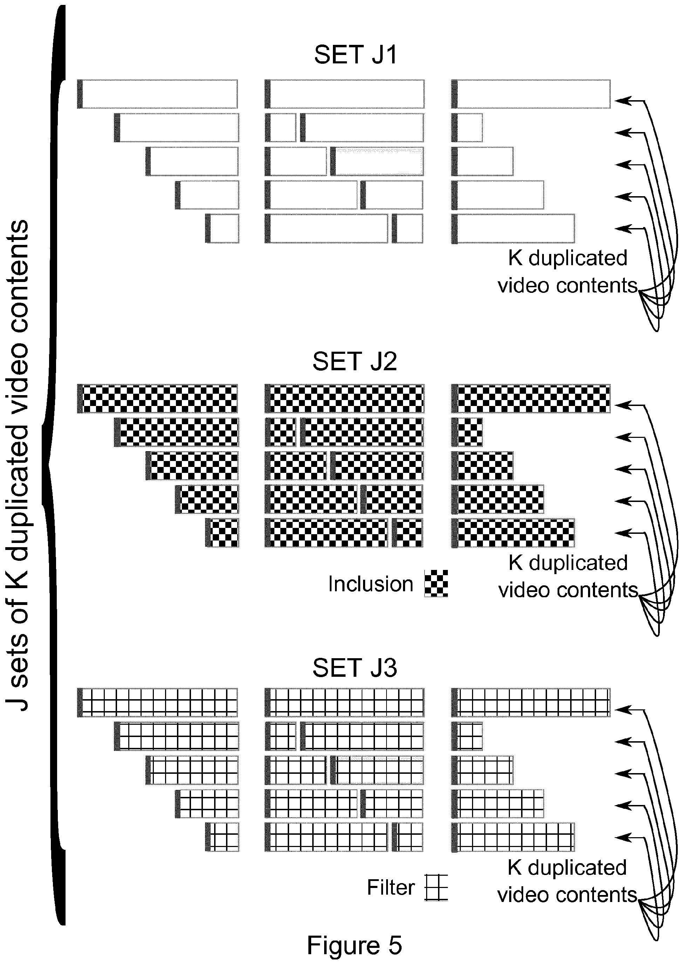

Figure 5 illustrates, in a particular embodiment, the step 300. This step relates to obtaining J sets of K duplicated video contents. The number J is the number of pre-defined image processing. As explained previously, an image processing can be any inclusions and/or any filters (color change, sepia, black and white, blurring etc.).

As it is shown on the figure 5, J is equal to 3, the set J1 is a set without any image processing applied. It is therefore an exact copy of the original K duplicated video contents.

The set J2 is a set of K duplicated video contents where an inclusion, such as a logo for instance, has been applied on only some or every frames.

The set J3 is a set of K duplicated video contents where a filter has been applied all over the frames.

It has to be noted that a set Jᵢ may comprise an inclusion as well as a filter applied on the same frame.

This step 300 creates, inside the computerized system, J sets of K duplicated video contents, at least some of the set Jᵢ are respectively dedicated to particular image processing. Each kind of image processing can be based on the multimedia content and/or the user profile and/or any kind of relevant information. For instance, in the case where the multimedia content is a documentary on an old trademark of drinks, the image processing can be composed of the inclusion of the trademark logo on a part of the frame area as well as a filter to transform the frames in black and white frames for example.

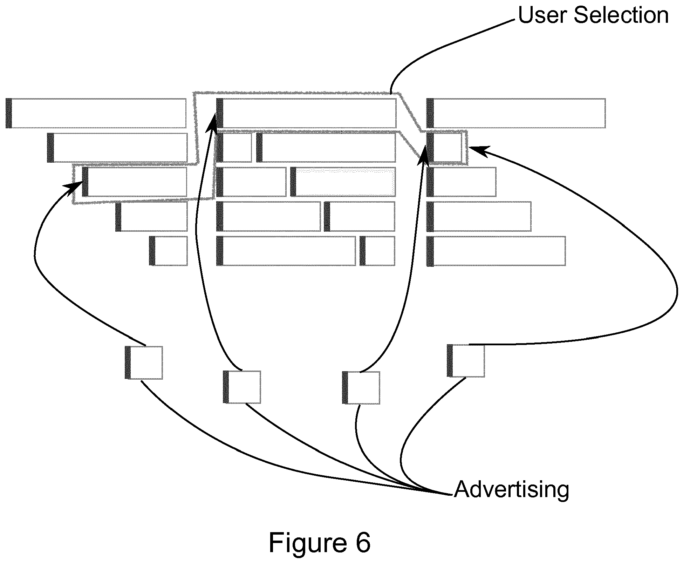

Figure 6 illustrates, in a particular embodiment, the insertion of advertisings inside the user's selected video content. The advertisings are pre-encoded multimedia content, for example a pre-encoded video. Because of this pre-encoding state, the multimedia content starts by an I-frame if it is a video for example. By this way, the video advertising can be positioned anywhere between any one of the pre-encoded segments of the user's selected video content.

The insertion position of the advertising as well as the number of advertisings, their length and the kind of advertisings are parameters referred to as "advertisings parameters".

For example, the user's selected video content can start by an advertising regarding the video content such as a commercial product for example.

In a preferred embodiment, the advertisings parameters are automatically managed. This management is based on the multimedia content and/or the user's profile and/or the receiver profile if the user wants to share his selected video part.

In another embodiment, the user himself manages the advertisings parameters.

In another embodiment, the advertisings are linked to the inclusions of the user's chosen set of K duplicated video contents.

According to the present invention, an inclusion is an overprinted advertising over the multimedia content.

In one embodiment, it can be advantageous that the advertisings, inserted inside the user's selected video content, are linked to the inclusions overprinted over the video content.

The present invention is a method taking place into a computerized system of delivering a multimedia content over a communication network comprising at least one device being able to communicate wirelessly or non-wirelessly over at least one communication network, for example the Internet, at least one memory device being able to store data and/or a software containing instructions formatted to be read and executed by at least one processor of the computerized system. The execution of the said software comprises the execution of the method of the present invention preferably in real time. The method of the present invention is advantageously executed in real time by said computerized system.

According to an embodiment, at least the steps 200, 300, 400, 500, 700, 800, 900 and 1000 are performed by the server. The server is remotely located from the user terminal. The server is connected to the user terminal by at least one communication network such as the Internet.

According to an embodiment, all the steps of the present invention are performed by the server.

According to an embodiment, the storing step 1000 can be done on the user terminal. The server can send to the user terminal the user's selected multimedia content in order to be stored on the user terminal or on any memory device.

In another embodiment, the user's selected multimedia content can be stored on the said server and/or on another server and/or on any data base connected to the said server by a communication network such as the Internet.

Advantageously, the use of at least one server allows having a real time execution of the present invention.

According to an embodiment, at least the steps 100, 500 and 600 are performed by the user terminal.

According to an embodiment, the step 300 is performed by the user terminal. The execution of the step 300 on the user terminal allows the user to use any personal features in order to apply image processing on his selected multimedia content.

According to an embodiment, all the steps of the present invention are performed by the user terminal. The user terminal can be connected to communication network and/or memory storage. By this way, the user terminal can share and/or store the selected multimedia content over at least one communication network such as the Internet. The user's selected multimedia content can be stored on the server for example and/or on any memory device.

According to an embodiment, the user selection relates to an instruction sent to the server. This instruction can comprise a start and a stop of the user's selected multimedia content and/or a command to send and/or store the user's selected multimedia content.

According to an embodiment the steps 500 to 1000 are performed in the numerical order. These steps are triggered by the user when his selection of the multimedia content is done for example.

The foregoing description has provided by way of exemplary and nonlimiting examples a full and informative description of various method, apparatus and computer program software for implementing the exemplary embodiments of this invention. However, various modifications and adaptations may become apparent to those skilled in the relevant arts in view of the foregoing description, when read in conjunction with the accompanying drawings and the appended claims.

The use of other similar or equivalent modifications may be attempted by those skilled in the art. However, all such and similar modifications of the teachings of this invention will still fall within the scope of the embodiments of this invention.

Furthermore, some of the features of the exemplary embodiments of this invention may be used to advantage without the corresponding use of other features. As such, the foregoing description should be considered as merely illustrative of the principles, teachings and embodiments of this invention, and not in limitation thereof.

The present invention is not limited to the embodiments described in the foregoing but extends to any embodiment in conformity with the claims.

## Claims

1. Method for obtaining a user selected multimedia content part comprising a video content, based on a multimedia content comprising at least an initial video content including at least an initial I-frame, the method comprising:
• A processing step comprising at least the following step performed by a server connected to a user terminal or by a user terminal and based on the initial video content:
a) Obtaining (200, 400) K duplicated video contents, each of the K video contents comprising groups of one or two segments, each segment comprising frames, each group comprising N frames, the first segment of each group comprising i*X frames; and the other segment of the group comprising (K-i)*X frames, wherein K is equal to N divided by X, wherein X is a frame accuracy for the multimedia content part selection and wherein i is an integer and i = 0 to K-1; each segment being encoded in order to begin with an I-frame;
• A selecting step performed by the server connected to the user terminal or by the user terminal after the processing step and upon reception of at least one user's instruction and comprising at least:
b) Selecting (600) a first I-frame and a last frame taken among the segments of any one of the K duplicated video contents;
c) Selecting (700), among anyone of the K duplicated video contents, a first segment starting with the selected first I-frame;
d) Selecting (800), among anyone of the K duplicated video contents, a last segment ending with the selected last frame;
e) Assembling (900), in between the first segment and the last segment, zero, one or a plurality of intermediate segments taken among any one of the K duplicated video contents and taken in between the first segment and the last segment in order to have all the frames contained in said one or in said plurality of said intermediate segments in between the first and the last frames, obtaining thereby the user selected multimedia content part;
f) Sharing (1000), over at least one communication network, and/or storing (1000), on a memory device, the user's selected multimedia content part.

2. The method according to the preceding claim, wherein the step a) comprises a decompression of at least a part the initial video content, and wherein the K duplicated video contents are obtained from said decompression of at least a part the initial video content.

3. The method according to the preceding claim, wherein obtaining the K duplicated video contents comprises creating each K duplicated video contents while the other K duplicated video contents are also being created.

4. The method according to any one of the preceding claims, wherein the plurality of intermediate segments, taken among any one of the K duplicated video contents in between the first segment and the last segment in order to have all frames in between the first frame and the last frame, is the plurality of intermediate segments with the lowest memory size.

5. The method according to any one of the preceding claims, wherein the multimedia content is streamed over at least one communication network and wherein said processing step is performed while the multimedia content is being streamed over the at least one communication network.

6. The method according to any one of the preceding claims, wherein the processing step and the selecting step, in particular steps b), c), d), e) et f), are performed on the server connected to the user terminal.

7. The method according to any one of the preceding claims, comprising before the selecting step b) a step of receiving a first frame selected by the user and wherein the selecting step b) comprises an automatic selection of an I-frame as the first I-frame, the automatically selected first I-frame being the closest I-frame from said first frame selected by the user.

8. The method of any of the claims 1 to 6, wherein the selecting step b) comprises enabling the user to only select an I-frame among any one of the I-frames of any one of the K duplicated video contents and wherein said first I-frame is a manually selected I-frame.

9. The method according to any one of the preceding claims, wherein the selecting step b) comprises a manual selection of said last frame.

10. The method according to any one of the preceding claims, wherein the assembling step e) comprises an insertion of advertisings inside the user's selected multimedia content part.

11. The method according to any one of the preceding claims, further comprising :
- during the step a) :
• Obtaining (300) J sets of K duplicated video contents, each set comprising K duplicated video contents, at least one of the J sets comprising an image processing performed on all of its K duplicated video contents, the image processing being anyone of : adding an inclusion on at least a plurality of frames of the K duplicated video contents of the set; applying a filter on at least a plurality of frames of the K duplicated video contents of the set;
- between the steps a) and b), a step a') comprising: selecting (500), preferably automatically, a set S among any of the J sets of K duplicated video contents;
- performing the steps b) to f) based on said set S.

12. The method of claim 11 taken in combination with claim 2, wherein the step a) comprises a decompression of at least a part the initial video content which includes decompressing segments, and wherein the K duplicated video contents are obtained from said decompression of at least a part the initial video content; wherein during the step a) an image processing is applied on at least some of the decompressed segments, then these decompressed segments are encoded in order to begin by an I-frame and in order to obtain the J sets of K duplicated video contents.

13. The method of the two preceding claims, wherein the assembling step e) comprises an insertion of advertisings inside the user's selected multimedia content part, the advertising being based on the inclusions of the selected set S.

14. The method according to any one of the preceding claims, wherein the selection frame accuracy X and/or the number of N of frames in the group are chosen automatically in order to reduce the execution time and the used computing power.

15. Computer-program product that contains software program instructions, where execution of the software program instructions by at least one data processor results in performance of the method according to any one of the preceding claims.

## Patentansprüche

1. Verfahren zur Erlangung eines vom Benutzer ausgewählten Multimediainhaltsteils mit einem Videoinhalt auf der Basis eines Multimediainhalts, der mindestens einen anfänglichen Videoinhalt umfasst, der mindestens einen ersten I-Frame enthält, wobei das Verfahren umfasst:
• Einen Verarbeitungsschritt, der mindestens den folgenden Schritt umfasst, der von einem Server durchgeführt wird, der mit einem Benutzerendgerät oder von einem Benutzerterminal verbunden ist und auf dem anfänglichen Videoinhalt beruht:
a) Erlangung von (200, 400) K duplizierten Videoinhalten, jeweils mit Gruppen von einem oder zwei Segmenten, wobei jedes Segment Frames umfasst, jede Gruppe N Frames umfasst, wobei das erste Segment jeder Gruppe i*X Frames umfasst; und das andere Segment der Gruppe (K-i)*X-Frames umfasst, wobei K gleich N dividiert durch X ist, wobei X eine Rahmengenauigkeit für die Auswahl des Multimediainhaltsteils und i eine ganze Zahl und i = 0 bis K-1 ist; jedes Segment wird so codiert, dass es mit einem I-Frame beginnt;
• Ein Auswahlschritt, der von dem mit dem Benutzerterminal verbundenen Server durchgeführt wird oder vom Benutzerterminal nach dem Verarbeitungsschritt und bei Empfang von mindestens einer Anweisung des Benutzers, die mindestens umfasst:
b) Auswahl (600) eines ersten I-Frames und eines letzten Frames aus den Segmenten eines beliebigen K duplizierten Videoinhalt;
c) Auswahl (700) aus einem beliebigen K duplizierten Video Inhalt, ein erstes Segment beginnend mit dem ausgewählten ersten I-Frame;
d) Auswahl (800) aus einem beliebigen K duplizierten Videoinhalt, ein letztes Segment, das mit dem ausgewählten letzten Frame endet;
e) Zusammenführung (900) zwischen dem ersten und dem letzten Segment von null, einem oder mehreren Zwischensegmenten, die aus einem beliebigen K duplizierten Videoinhalte zwischen dem ersten Segment und dem letzten Segment entnommen werden, um alle im genannten einen oder in mehreren Zwischensegmenten zwischen dem ersten und dem letzten Frame zu haben und so den vom Benutzer ausgewählten Multimediainhaltsteil zu erhalten;
f) Teilen (1000) über mindestens ein Kommunikationsnetzwerk und/oder Speichern (1000) auf einer Speichereinrichtung, dem vom Benutzer ausgewählten Multimediainhaltsteil.

2. Das Verfahren gemäß dem vorangehenden Anspruch, **dadurch gekennzeichnet, dass** der Schritt a) eine Dekomprimierung von mindestens einem Teil des anfänglichen Videoinhalts umfasst und die K duplizierten Videoinhalte aus der genannten Dekomprimierung von mindestens einem Teil des anfänglichen Videoinhalts erlangt werden.

3. Das Verfahren gemäß dem vorangehenden Anspruch, **dadurch gekennzeichnet, dass** der Erhalt der K duplizierten Videoinhalte darin besteht, dass jeder K duplizierte Videoinhalt erstellt wird, während die anderen K duplizierten Videoinhalte ebenfalls erstellt werden.

4. Das Verfahren gemäß einem der vorangehenden Ansprüche, **dadurch gekennzeichnet, dass** die Mehrzahl der Zwischensegmente, die aus einem der K duplizierten Videoinhalte zwischen dem ersten Segment und dem letzten Segment entnommen wurden, um alle Frames zwischen dem ersten Frame und dem letzten Frame zu haben, die Mehrzahl der Zwischensegmente mit der niedrigsten Speichergröße darstellt.

5. Das Verfahren gemäß einem der vorangehenden Ansprüche, **dadurch gekennzeichnet, dass** der Multimediainhalt über mindestens ein Kommunikationsnetzwerk gestreamt wird und der genannte Verarbeitungsschritt durchgeführt wird, während der Multimediainhalt über das mindestens ein Kommunikationsnetz gestreamt wird.

6. Das Verfahren gemäß einem der vorangehenden Ansprüche, **dadurch gekennzeichnet, dass** der Verarbeitungsschritt und der Auswahlschritt, insbesondere die Schritte b), c), d), e) und f) auf dem mit dem Benutzerterminal verbundenen Server durchgeführt werden.

7. Das Verfahren gemäß einem der vorangehenden Ansprüche, **dadurch gekennzeichnet, dass** es vor dem Auswahlschritt b) einen Schritt des Empfangens eines von dem Benutzer ausgewählten ersten Rahmens umfasst und der Auswahlschritt b) eine automatische Auswahl eines I-Frames als ersten I-Frame umfasst, wobei der automatisch ausgewählte erste I-Frame der nächstliegende Frame des vom Benutzer ausgewählten ersten Frames ist.

8. Das Verfahren gemäß einem der Ansprüche 1 bis 6, wobei der Auswahlschritt b) die Befähigung des Benutzers umfasst, nur einen I-Frame aus den I-Frames eines beliebigen K-duplizierten Videoinhalts auszuwählen, wobei der erste I-Frame ein manuell ausgewählter I-Frame ist.

9. Das Verfahren gemäß einem der vorangehenden Ansprüche, **dadurch gekennzeichnet, dass** der Auswahlschritt b) eine manuelle Auswahl des genannten letzten Frames umfasst.

10. Das Verfahren gemäß einem der vorangehenden Ansprüche, **dadurch gekennzeichnet, dass** der Montageschritt e) eine Einfügung von Werbung innerhalb des vom Benutzer ausgewählten Multimediainhaltsteils umfasst.

11. Das Verfahren gemäß einem der vorangehenden Ansprüche, **dadurch gekennzeichnet, dass** ferner
- während des Schrittes a):
• der Erhalt von (300) J Sätzen von K duplizierten Videoinhalten enthalten ist, wobei jeder Satz K duplizierte Videoinhalte enthält, wobei mindestens einer der J Sätze eine Bildverarbeitung umfasst, die an allen seinen K duplizierten Videoinhalten durchgeführt wird und die Bildverarbeitung eines der folgenden Dinge ist: Hinzufügen eines Einschlusses auf mindestens einer Mehrzahl von Rahmen der K duplizierten Videoinhalte des Satzes; Aufbringen eines Filters auf mindestens einer Mehrzahl von Frames der K duplizierten Videoinhalte des Satzes;
- zwischen den Schritten a) und b), ein Schritt a') mit: Auswahl (500), vorzugsweise automatisch, eines Satzes S aus einem der J Sätze der K duplizierten Videoinhalte;
- Durchführen der Schritte b) bis f) basierend auf dem Satz S.

12. Das Verfahren nach Anspruch 11 in Kombination mit Anspruch 2, wobei der Schritt a) eine Dekomprimierung von mindestens einem Teil des anfänglichen Videosinhalts umfasst, der dekomprimierende Segmente enthält, wobei die K duplizierten Videoinhalte aus der Dekomprimierung von mindestens einem Teil des anfänglichen Videoinhalts stammen; während des Schrittes a) wird eine Bildverarbeitung in mindestens einigen der dekomprimierten Segmente angewendet und diese dekomprimierten Segmente werden anschließend codiert, um mit einem I-Frame zu beginnen und die J Sätze von K duplizierten Videoinhalten zu erhalten.

13. Das Verfahren gemäß den beiden vorangehenden Ansprüchen, **dadurch gekennzeichnet, dass** der Montageschritt e) eine Einfügung von Werbung innerhalb des vom Benutzer ausgewählten Multimediainhaltsteils umfasst, wobei die Werbung auf Einschlüssen des ausgewählten Satzes S beruht.

14. Das Verfahren nach einem der vorangehenden Ansprüche, **dadurch gekennzeichnet, dass** die Selektionsrahmengenauigkeit X und/oder die Anzahl von N Frames in der Gruppe automatisch ausgewählt werden, um die Ausführungszeit und die genutzte Rechenleistung zu reduzieren.

15. Softwareprodukt, das die Softwareprogrammanweisungen enthält, wobei die Ausführung der Softwareprogrammanweisungen durch mindestens einen Datenprozessor zur Durchführung des Verfahrens nach einem der vorangehenden Ansprüche führt.

## Revendications

1. Procédé permettant d'obtenir une partie de contenu multimédia sélectionnée par l'utilisateur, comprenant un contenu vidéo, sur la base d'un contenu multimédia comprenant au moins un contenu vidéo initial incluant au moins une image de type I initiale, ledit procédé comprenant :
• une étape de traitement comprenant au moins l'étape suivante exécutée par un serveur connecté à un terminal utilisateur ou par un terminal utilisateur et basée sur le contenu vidéo initial :
(a) obtention (200, 400) de K contenus vidéo dupliqués, chacun des K contenus vidéo comprenant des groupes d'un ou de deux segment(s), chaque segment comprenant des images, chaque groupe comprenant N images, le premier segment de chaque groupe comprenant i*X images ; et l'autre segment du groupe comprenant (K-i)*X images, où K est égal à N divisé par X, dans lequel X est une précision du nombre d'images pour la sélection de la partie de contenu multimédia et dans lequel i est un nombre entier et i = 0 à K-1 ; chaque segment étant codé afin de commencer par une image de type I ;
• une étape de sélection exécutée par le serveur connecté au terminal utilisateur ou par le terminal utilisateur après l'étape de traitement et à la réception d'au moins une instruction de l'utilisateur et comprenant au moins :
(b) la sélection (600) d'une première image de type I et d'une dernière image prise parmi les segments de l'un quelconque des K contenus vidéo dupliqués ;
(c) la sélection (700), parmi l'un quelconque des K contenus vidéo dupliqués, d'un premier segment qui commence par la première image de type I sélectionnée ;
(d) la sélection (800), parmi l'un quelconque des K contenus vidéo dupliqués, d'un dernier segment qui se termine par la dernière image sélectionnée ;
(e) l'assemblage (900), entre le premier segment et le dernier segment, de zéro, d'un ou d'une pluralité de segment(s) intermédiaire(s) pris parmi l'un quelconque des K contenus vidéo dupliqués et pris entre le premier segment et le dernier segment afin que toutes les images soient contenues dans ledit un ou ladite pluralité desdits segments intermédiaires entre la première et la dernière images, en obtenant ainsi la partie de contenu multimédia sélectionnée par l'utilisateur ;
(f) le partage (1000), sur au moins un réseau de communication, et/ou le stockage (1000), sur un dispositif de mémoire, de la partie de contenu multimédia sélectionnée par l'utilisateur.

2. Procédé selon la revendication précédente, dans lequel l'étape a) comprend une décompression d'au moins une partie du contenu vidéo initial, et dans lequel les K contenus vidéo dupliqués sont obtenus à partir de ladite décompression d'au moins une partie du contenu vidéo initial.

3. Procédé selon la revendication précédente, dans lequel l'obtention des K contenus vidéo dupliqués comprend la création de chaque K contenu vidéo dupliqué alors que les autres K contenus vidéo dupliqués sont également en cours de création.

4. Procédé selon l'une quelconque des revendications précédentes, dans lequel la pluralité de segments intermédiaires, pris parmi l'un quelconque des K contenus vidéo dupliqués entre le premier segment et le dernier segment afin d'avoir toutes les images entre la première image et la dernière image, est la pluralité de segments intermédiaires ayant la taille de mémoire la plus petite.

5. Procédé selon l'une quelconque des revendications précédentes, dans lequel le contenu multimédia est diffusé sur au moins un réseau de communication et dans lequel ladite étape de traitement est exécutée alors que le contenu multimédia est en cours de diffusion sur le au moins un réseau de communication.

6. Procédé selon l'une quelconque des revendications précédentes, dans lequel l'étape de traitement et l'étape de sélection, en particulier les étapes b), c), d), e) et f) sont exécutées sur le serveur connecté au terminal utilisateur.

7. Procédé selon l'une quelconque des revendications précédentes, comprenant, avant l'étape b) de sélection une étape de réception d'une première image sélectionnée par l'utilisateur et dans lequel l'étape b) de sélection comprend une sélection automatique d'une image de type I comme étant la première image de type I, la première image de type I sélectionnée automatiquement étant l'image de type I la plus proche de ladite première image sélectionnée par l'utilisateur.

8. Procédé selon l'une quelconque des revendications 1 à 6, dans lequel l'étape b) de sélection comprend le fait de donner la capacité à l'utilisateur de ne sélectionner qu'une seule image de type I parmi l'une quelconque des images I de l'un quelconque des K contenus vidéo dupliqués et dans lequel ladite première image de type I est une image de type I sélectionnée manuellement.

9. Procédé selon l'une quelconque des revendications précédentes, dans lequel l'étape b) de sélection comprend une sélection manuelle de ladite dernière image.

10. Procédé selon l'une quelconque des revendications précédentes, dans lequel l'étape e) d'assemblage comprend l'insertion de publicités à l'intérieur de la partie de contenu multimédia sélectionnée par l'utilisateur.

11. Procédé selon l'une quelconque des revendications précédentes, comprenant en outre :
- au cours de l'étape a) :
• l'obtention (300) de J ensembles de K contenus vidéo dupliqués, chaque ensemble comprenant K contenus vidéo dupliqués, au moins l'un desdits J ensembles comprenant un traitement d'image effectué sur tous les K contenus vidéo dupliqués de celui-ci, le traitement d'image étant l'un quelconque parmi : l'ajout d'une inclusion sur au moins une pluralité d'images des K contenus vidéo dupliqués de l'ensemble ; l'application d'un filtre sur au moins une pluralité d'images des K contenus vidéo dupliqués de l'ensemble ;
- entre les étapes a) et b), une étape a') comprenant : la sélection (500), de préférence automatique, d'un ensemble S parmi l'un quelconque des J ensembles des K contenus vidéo dupliqués ;
- l'exécution des étapes b) à f), sur la base dudit ensemble S.

12. Procédé selon la revendication 11 prise en combinaison avec la revendication 2, dans lequel l'étape a) comprend une décompression d'au moins une partie du contenu vidéo initial qui inclut des segments de décompression, et dans lequel les K contenus vidéo dupliqués sont obtenus à partir de ladite décompression d'au moins une partie du contenu vidéo initial ; dans lequel, au cours de l'étape a) un traitement d'image est appliqué à au moins certains des segments décompressés, puis ces segments décompressés sont codés afin de commencer par une image de type I et afin d'obtenir les J ensembles de K contenus vidéo dupliqués.

13. Procédé selon les deux revendications précédentes, dans lequel l'étape d'assemblage e) comprend une insertion de publicités à l'intérieur de la partie de contenu multimédia sélectionnée par l'utilisateur, la publicité étant fondée sur les inclusions de l'ensemble sélectionné S.

14. Procédé selon l'une quelconque des revendications précédentes, dans lequel la précision du nombre d'images de sélection X et/ou le nombre de N images dans le groupe sont choisis automatiquement afin de réduire le temps d'exécution et la puissance de calcul utilisée.

15. Produit de programme informatique qui contient des instructions de programme logiciel où l'exécution des instructions de programme logiciel par au moins un processeur de données entraine la mise en ouvre du procédé selon l'une quelconque des revendications précédentes.
